# EUROPÄISCHE PATENTSCHRIFT

(11) **EP 0 769 990 B1**
(45) Veröffentlichungstag und Bekanntmachung des Hinweises auf die Patenterteilung: **18.10.2000**
(21) Anmeldenummer: 95923281.0
(22) Anmeldetag: 09.06.1995
(51) Int. Cl.: B23B 27/04

(54) **WERKZEUG**
TOOL
OUTIL

(30) Priorität: 12.07.1994 DE 4424534
(43) Veröffentlichungstag der Anmeldung: 02.05.1997
(73) Patentinhaber: ISCAR LTD., Migdal Tefen 24959 (IL)
(72) Erfinder: Oehler, Hermann, 74392 Freudental (DE)
(74) Vertreter: VOSSIUS & PARTNER
(86) Internationale Anmeldenummer: EP9502228
(87) Internationale Veröffentlichungsnummer: WO9601714

(56) Entgegenhaltungen:
- EP-A- 0 152 729
- EP-A- 0 385 495
- EP-A- 0 654 316
- US-A- 3 175 426

## Beschreibung

Die Erfindung betrifft ein Werkzeug zum Auswechseln einer Schneidplatte, die in einer Aufnahme eines Schneidplattenhalters zwischen zwei Schenkelteilen geklemmt gehalten ist.

Derartige Werkzeuge sind in der Regel als ein Hebel ausgebildet. Zum Auswechseln der Schneidplatte wird das eine Hebelende an einem der beiden, die Aufnahme für die Schneidplatte bildenden Schenkelteilen abgestützt. Das freie Hebelende kann dann manuell verstellt werden, so daß die beiden Schenkelteile gespreizt und die Schneidplatte aus der Aufnahme entnommen werden kann.

Hierbei kann nicht immer gewährleistet werden, daß das freie Hebelende um einen vorgegebenen Weg verstellt wird. Vielmehr besteht die Gefahr, daß die Schenkelteile unzulässig weit gespreizt werden. Dann werden sie plastisch verformt und stellen sich nach der Entlastung des Hebels nicht mehr in ihre Ausgangsstellung zurück. Dadurch weitet sich die Aufnahme auf, so daß die Schneidplatte nicht mehr sicher geklemmt werden kann und der Schneidplattenhalter somit ausgewechselt werden muß.

US-A-3 175 426 (nächstliegender vor veröffentlichter Stand der Technik) zeigt ein Werkzeug zum Auswechseln einer Schneidplatte das einen Grundkörper aufweist. An dem Grundkörper sind zwei Stützteile angeordnet, die je an einer Aufnahme des Schneidplattenhalters abgestützt sind. Eines der zwei Stützteile ist exzentrisch derart mittels eines Betätigungselementes um eine Schwenkachse verstellbar, daß der Abstand der beiden Stützteile zueinander veränderbar ist.

Die EP-A-654 316 (veröffentlicht am 24. Mai 1995; Art 54(3) EPÜ) beschreibt einen Klemmhalter für Schneideinsätze mit einem Schlitzaufweistschlüssel, der ein Paar im Abstand veränderbare Zapfen aufweist.

Es ist Aufgabe der Erfindung ein Werkzeug zu schaffen, das bedienungsfreundlich das Auswechseln einer Schneidplatte ohne Gefahr der Beschädigung des Schneidplattenhalters ermöglicht. Diese Aufgabe wird mit der Merkmalen des Patentanspruchs 1 gelöst.

Bevorzugte Weiterbildungen der Erfindung sind in den Unteransprüchen angegeben.

An einem Grundkörper ist in erstes Stützteil angeordnet, das an einer Aufnahme des Schneidplattenhalters abgestützt ist. Beabstandet zu dem ersten Stützteil ist ein zweites Stützteil angeordnet, das sich an einer weiteren Aufnahme, die im Bereich eines Schenkelteils der Aufnahme angeordnet ist, oder das sich an der Schneidplatte abstützt. Zumindest eines der beiden Stützteile ist exzentrisch um eine Schwenkachse derart mittels eines Betätigungselementes verstellbar, daß der Abstand der beiden Stützteile zueinander veränderbar ist.

Bei dieser Ausgestaltung kann der Grundkörper einfach so an dem Schneidplattenhalter angebracht werden, daß sich das erste Stützteil an der zugeordneten Aufnahme aufstützt. Das zweite Stützteil kann in dieser Stellung des Grundkörpers beispielsweise in einer Aufnahme, die an einem der beiden Schenkelteile angeordnet ist, festgelegt sein. Mit dem Betätigungselement und der exzentrischen Anordnung mindestens eines Stützteiles können die beiden Stützteile relativ zueinander verschoben werden. Dadurch werden auch die beiden Schenkelteile gespreizt, so daß die Klemmung, mittels derer die Schneidplatte gehalten wird, aufgehoben ist. Die beiden Schenkelteile können jeweils nur um einen festen, vorgegebenen Weg gegeneinander verstellt werden. Dieser Weg wird durch das Maß der Exzentrizität festgelegt. Eine plastische Verformung der Schenkelteile ist damit sicher verhindert.

Nach einer vorteilhaften Ausgestaltung der Erfindung ist es vogesehen, daß der Grundkörper eine Bohrung aufweist, in der ein Bolzen drehbar um die Schwenkachse gelagert ist und daß an dem stirnseitigen einen Ende des Bolzens das Stützteil exzentrisch zu der Schwenkachse angeordnet ist. Der Bolzen bildet in der Bohrung eine Drehlagerung, die mit geringem Aufwand fertigbar ist. Um eine Verdrehung des Bolzens zu erreichen ist es beispielsweise möglich, daß an dem Bolzen als Betätigungselement ein Griff mit einer Handhabe angeschlossen ist. Infolge einer Verstellung des Griffes rotiert der Bolzen in der Drehlagerung. Infolge dieser Verstellung wird das exzentrisch zur Schwenkachse angeordnete Stützteil in einer Kreisbahn um die Schwenkachse geführt. Hierdurch verändert sich der Abstand zu dem zweiten Stützteil. Mit dieser Relativbewegung der beiden Stützteile zueinander wird das Auswechseln der Schneidplatte ermöglicht.

Nach einer vorteilhaften Ausgestaltung der Erfindung ist es vorgesehen, daß das erste Stützteil als zylindrischer Stift ausgebildet ist, der mit seinem einen Ende in einer Bohrung des Grundkörpers gehalten ist und der mit seinem dem Grundkörper abgekehrten Ende in eine Bohrung des Schneidplattenhalters einsetzbar ist.

Eine bessere Handhabung des Werkzeuges wird dadurch erreicht, daß der Grundkörper mittels eines oder mehreren Ansätzen beabstandet zu dem Schneidplattenhalter gehalten ist.

Eine ergonomisch günstige Grifform des Grundkörpers ist dadurch erreicht, daß der Grundkörper zwei Endabschnitte und einen die Endabschnitte verbindenden Mittelabschnitt aufweist, daß die Endabschnitte die Stützteile tragen und daß der Mittelabschnitt im Querschnitt schmäler als die Endabschnitte ausgebildet ist.

Nach einer bevorzugten Ausgestaltungsvariante eines Werkzeuges ist es vorgesehen, daß die beiden Aufnahmen für die Stützteile jeweils an einem Schenkelteil der Aufnahme für die Schneidplatte angeordnet sind und daß infolge der Verstellung der beiden Stützteile gegeneinander die Schenkelteile gespreizt und die Aufnahme so elastisch aufgeweitet ist. Im aufgeweiteten Zustand der Aufnahme kann die Schneidplatte einfach eingesetzt bzw. entnommen werden.

Die Erfindung wird im folgenden anhand von den in den Zeichnungen dargestellten Ausführungsbeispielen näher erläutert. Es zeigen
**Fig. 1** in Frontansicht und im Schnitt einen Meißelhalter mit einem seitlich angebrachten Werkzeug zum Auswechseln einer Schneidplatte und
**Fig. 2** die Darstellung nach Fig. 1 in Seitenansicht.

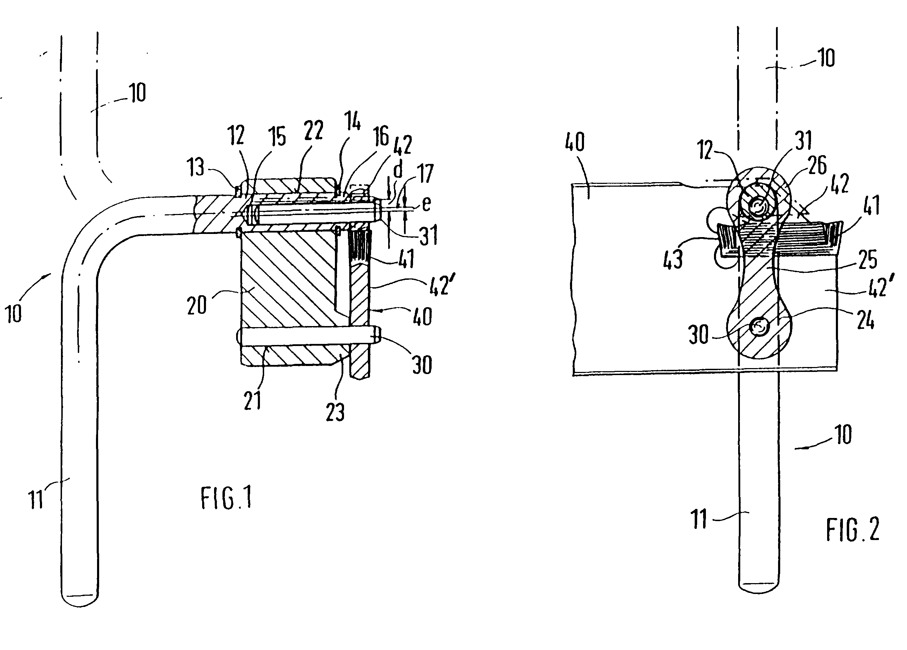

In Fig. 1 ist in Vorderansicht ein Meißelhalter 40 gezeigt, an dem in einer Aufnahme eine Schneidplatte 41 festgelegt ist. Solche Schneidplattenhalter werden bei Drehmaschinen als Abstechwerkzeuge verwendet. Die Schneidplatte 41 ist in der Aufnahme zwischen zwei Schenkelteilen 42 des Schneidplattenhalters 40 geklemmt gehalten. Wie die Fig. 2 näher zeigt, weisen die beiden Schenkelteile 42 zueinander parallele Auflageflächen euf, die an der Schneidplatte 41 angepreßt sind. Ist die Schneidplatte 41 nach einer Bearbeitung eines Werkstückes verschlissen, so muß diese ausgetauscht werden. Hierzu wird das Werkzeug verwendet, das, wie in Fig. 1 dargestellt ist, seitlich an dem Schneidplattenhalter 40 angebracht werden kann. Das Werkzeug weist einen Grundkörper 20 auf, in den zwei zueinander parallele Bohrungen 21,22 eingebracht sind.

In die Bohrung 21 ist ein als Stift ausgebildetes erstes Stützteil 30 eingesetzt. Der Außendurchmesser des ersten Stützteiles 30 ist geringfügig größer gewählt als der Durchmesser der Bohrung 21, so daß das erste Stützteil 30 geklemmt in der Bohrung 21 gehalten ist. In die zu der Bohrung 21 parallel beabstandete Bohrung 22 ist ein Bolzen 12 eingeführt. Die Bohrung 22 und der Bolzen 12 bilden eine Drehlagerung. Um zu verhindern, daß der Bolzen 12 aus der Bohrung 22 ausgezogen werden kann, sind an den Bohrungsaustritten jeweils ein Sicherungsring 13,14 an dem Bolzen 12 festgelegt. An dem Bolzen 12 ist einstückig ein Betätigungselement 10 angeschlossen. Das Betätigungselement 10 verläuft ein Stück weit in Achsrichtung der Bohrung 22 und ist dann um 90° zu einem Griff 11 abgebogen. Die Mittelachse der Bohrung 22 bildet eine Schwenkachse 17 um die der Bolzen 12 rotiert werden kann. In das dem Griff 11 abgekehrte stirnseitige Ende des Bolzens 12 ist ein Sackloch 15 eingebohrt. Die Bohrungsachse des Sackloches 15 ist um den Abstand e parallel beabstandet zu der Schwenkachse 17 angeordnet. In das Sackloch 15 ist ein zweites Stützelement 31 eingesetzt.

Mit dem Abstand e ist somit das zweite, als Stift ausgebildete Stützteil 31 exzentrisch zur Schwenkachse 17 angeordnet. Um die dem Schneidplattenhalter 40 zugewandte Austrittsöffnung der Bohrung 21 herum ist ein Ansatz 23 angeordnet, der zusammen mit einem Vorsprung 16 des Bolzens 12 den Grundkörper 20 beabstandet zu dem Schneidplattenhalter 40 hält. Damit ist verhindert, daß der Grundkörper 20 an der seitlich über den Schneidplattenhalter 40 verstehenden Schneidplatte 41 anliegt. Desweiteren ist hierdurch eine bessere Handhabung des Grundkörpers erreicht.

Die beiden Stützteile 30,31 sind in Aufnahmen des Schneidplattenhalters 40 eingeführt. Die Aufnahmen sind jeweils als Bohrung ausgebildet und in die Schenkelteile 42 eingebracht. Zum Spreizen der beiden Schenkelteile 42 und somit zum Aufweiten der Aufnahme in der die Schneidplatte 41 gehalten ist, wird der Griff 11 des Betätigungselementes 10 in die, in gestrichelter Darstellung gezeigte Position gebracht. Hierdurch schwenkt das zweite Stützteil 31 um die Schwenkachse 17. In der Endstellung des Hebels 11 hat sich das zweite Stützteil um das doppelte Maß der Exzentrizität e verlagert, das in der Fig. 1 mit d näher gekennzeichnet ist. Hierdurch wird, wie dies in Fig. 2 mit einer gestrichelten Linie angedeutet ist, das obere Schenkelteil 42 von der Schneidplatte 41 um das Maß d abgehoben.

Die Klemmung, die die Schneidplatte 41 festlegt ist dadurch aufgehoben, so daß die Schneidplatte 41 vom Schneidplattenhalter 40 entnommen werden kann. Wie die Fig. 2 weiter zeigt, ist die Schneidplatte 41 im vorliegenden Fall als Wechselplatte ausgelegt und kann nach erfolgtem Verschleiß um 180° verdreht wieder in die Aufnahme des Schneidplattenhalters 40 eingesetzt werden. Rückseitig bildet die Aufnahme einen Anschlag 43 aus, gegen den die Schneidplatte 41 definiert angeschlagen ist. Wird der Hebel 11 wieder in seine Ursprungslage zurückgeführt, so setzt sich das obere Schenkelteil 42 auf die Schneidplatte 41 auf, so daß diese wieder geklemmt gehalten ist. Das Werkzeug kann dann vom Schneidplattenhalter 40 abgezogen werden, wobei die Stützteile 30,31 aus den Bohrungen des Schneidplattenhalters 40 ausrücken.

Der Grundkörper 20 ist dreiteilig aus zwei Endstücken 24,26 gebildet die miteinander über ein Mittelteil 25 verbunden sind. Das Mittelteil 25 ist gegenüber den Endabschnitten 24,26 verjüngt ausgebildet, so daß der Grundkörper 20 ergonomisch günstig gegriffen und gehandhabt werden kann. Zur Handhabung kann der Griff 11 mit der Hand umschlossen werden und der Grundkörper 20 an dem Mittelteil zwischen Daumen und Zeigefinger gehalten werden.

## Patentansprüche

1. Werkzeug zum Auswechseln einer Schneidplatte (41) in einem starren Schneidplattenhalter (40), der
einen Schneidplattenaufnahmeschlitz am vorderen Ende des Schneidplattenhalters (40), wobei der Schlitz zwischen einem elastisch verformbaren Schenkelteil (42) und einem starren Schenkelteil (42') des Schneidplattenhalters (40) definiert ist und
zwei beabstandeten Bohrungen, die in dem elastischen Schenkelteil (42) bzw. in dem starren Schenkelteil (42') ausgebildet sind, aufweist, mit
(a) einem Grundkörper (20) mit einem ersten Stützteil (30), das in dem Grundkörper (20) befestigt ist und von diesem herausragt, so daß es in die Bohrung des starren Schenkelteils (42') einführbar ist,
(b) einem zweiten Stützteil (31), das in dem Grundkörper (20) gelagert ist und aus diesem hervorsteht, so daß es in die Bohrung des elastischen Schenkelteils (42) einführbar ist und in einer Bohrung im Grundkörper (20) exzentrisch verdrehbar ist, und mit
(c) einem Betätigungselement (10), das mit dem zweiten Stützteil (31) verbunden ist, um dieses exzentrisch zu verdrehen und so gegenüber dem ersten Stützteil (30) zu versetzen, wobei
(d) das erste Stützteil (30) aus einer im wesentlichen ebenen Anlagefläche eines vorstehenden Ansatzes (23) des Grundkörpers (20) und das zweite Stützteil (31) aus einer zusätzlichen Grundkörperfläche vorstehen, die gegenüber der Anlagefläche des Ansatzes (23) ausgespart ist,
so daß beim vollständigen Einführen der Stützteile (30, 31) in die Bohrungen der beiden Schenkelteile (42', 42) die Anlagefläche des Ansatzes (23) an dem starren Schenkelteil (42') anliegt und die zusätzliche Grundkörperfläche von einer Schneidplatte (41) so beabstandet ist, daß die Schneidplatte (41) beim Verbiegen des elastischen Schenkelteils (42) durch exzentrisches Verdrehen des zweiten Stützteils (31) leicht in den Schlitz einführbar bzw. aus diesem herausnehmbar ist.

2. Werkzeug nach Anspruch 1,
dadurch gekennzeichnet,
daß der Grundkörper (20) eine Bohrung (22) aufweist, in der ein Bolzen (12) drehbar um die Schwenkachse (17) gelagert ist, und
daß an den stirnseitigen einen Enden des Bolzens (22) das Stützteil (31) exzentrisch zur Schwenkachse (17) angeordnet ist.

3. Werkzeug nach Anspruch 2,
dadurch gekennzeichnet,
daß an den Bolzen (12) als Betätigungselement (10) ein Griff mit einer Handhabe (11) angeschlossen ist.

4. Werkzeug nach einem der Ansprüche 1 bis 3,
dadurch gekennzeichnet,
daß das erste Stützteil (30) als zylindrischer Stift ausgebildet ist, der mit seinem einen Ende in einer Bohrung (21) des Grundkörpers (20) gehalten ist und der mit seinem dem Grundkörper (20) abgekehrten Ende in eine Bohrung des Schneidplattenhalters (40) einsetzbar ist.

5. Werkzeug nach einem der Ansprüche 1 bis 4,
dadurch gekennzeichnet,
daß der Grundkörper (20) zwei Endabschnitte 124,26) und einen die Endabschnitte (24,26) verbindenden Mittelabschnitt (25) aufweist,
daß die Endabschnitte (24,26) die Stützteile (30,31) tragen und
daß der Mittelabschnitt (25) im Querschnitt schmäler als die Endabschnitte (24,26) ausgebildet ist.

6. Werkzeug nach einem der Ansprüche 1 bis 5,
dadurch gekennzeichnet,
daß die beiden Aufnahmen für die Stützteile (30,31) jeweils an einen Schenkelteil (42) der Aufnahme für die Schneidplatte (41) angeordnet sind, und
daß infolge der Verstellung der beiden Stützteile (30,31) gegeneinandar die Schenkelteile (42) gespreizt und die Aufnahme so elastisch aufgeweitet ist.

## Claims

1. A tool for replacing a cutting insert (41) in a rigid cutting insert holder (40) having
a cutting insert seat slot at the front end of said cutting insert holder (40), said slot being defined between an elastically deformable arm (42) and a rigid arm (42') of said cutting insert holder (40), and
two spaced bores formed in said elastic arm (42) and/or in said rigid arm (42'), comprising
(a) a base body (20) having a first support (30) being mounted in said base body (20) and projecting therefrom so that it can be inserted into the bore of said rigid arm (42'),
(b) a second support (31) being supported in said base body (20) and projecting therefrom so that it is insertable into the bore of said elastic arm (42) and eccentrically rotatable in a bore of said base body (20), and comprising
(c) an actuating element (10) being connected with said second support (31) in order to rotate it eccentrically and thus displace it with respect to said first support (30), wherein
(d) said first support (30) projects from an essentially planar abutment surface of a projecting shoulder (23) of said base body (20) and said second support (31) projects from an additional base body surface being recessed with respect to the abutment surface of said shoulder (23), so that when completely inserting said supports (30, 31) into the bores of said two arms (42', 42), the abutment surface of said shoulder (23) abuts said rigid arm (42') and the additional base body surface is spaced from a cutting insert (41), that said cutting insert (41) can easily be inserted in and removed from the slot when bending said elastic arm (42) by eccentrically rotating said second support (31).

2. The tool according to claim 1, characterized in that
said base body (20) comprises a bore (22) in which a bolt (12) is arranged such that it can rotate around the swivel axis (17), and
that at the front end of said bolt (22) said support (31) is arranged eccentrically with respect to said swivel axis (17).

3. The tool according to claim 2, characterized in that a handle having a manipulator (11) is connected to the bolt (12) as an actuating element (10).

4. The tool according to any one of claims 1 to 3, characterized in that said first support (30) is realized as a cylindrical pin whose one end is held in a bore (21) of said base body (20) and whose end opposite said base body (20) can be inserted into a bore of said cutting insert holder (40).

5. The tool according to any one of claims 1 to 4, characterized in that
said base body (20) comprises two end portions (24, 26) and a center portion (25) connecting said end portions (24, 26),
that said end portions (24, 26) support said supports (30, 31), and
that said center portion (25) has a smaller cross-section than said end portions (24, 26).

6. The tool according to any one of claims 1 to 5, characterized in that
the two seats for said supports (30, 31) are each arranged at an arm (42) of the seat for said cutting insert (41), and
that due to the displacement of said two supports (30, 31) with respect to each other, said arms (42) are spread and the seat is thus widened elastically.

## Revendications

1. Outil pour le remplacement d'une matrice de découpage (41) dans un porte-matrice de découpage rigide (40), qui présente :
une fente réceptrice de matrice de découpage à l'extrémité avant du porte-matrice de découpage (40), la fente étant définie entre une partie en forme d'aile (42) déformable de manière élastique et une partie en forme d'aile rigide (42') du porte-matrice de découpage (40), et
deux alésages espacés, qui sont ménagés dans la partie en forme d'aile élastique (42) ou dans la partie en forme d'aile rigide (42'), comprenant :
(a) un corps de base (20) ayant une première partie d'appui (30), qui est fixée au corps de base (20) et en fait saillie, de telle sorte qu'elle puisse être introduite dans l'alésage de la partie en forme d'aile rigide (42'),
(b) une seconde partie d'appui (31), qui est montée dans le corps de base (20) et en fait saillie de telle sorte qu'elle puisse être insérée dans l'alésage de la partie en forme d'aile élastique (42) et qu'elle puisse tourner de manière excentrique dans un alésage du corps de base (20), et comprenant :
(c) un élément de commande (10), qui est relié à la seconde partie d'appui (31), pour faire tourner celle-ci de manière excentrique et la déplacer ainsi par rapport à la première partie d'appui (30),
(d) la première partie d'appui (30) faisant saillie d'une face d'application sensiblement plate d'une butée saillante (23) du corps de base (20) et la seconde partie d'appui (31) faisant saillie d'une face supplémentaire du corps de base, qui est ménagée en regard de la face d'application de la butée,
de telle sorte que, lors de l'insertion complète des parties d'appui (30, 31) dans les alésages des deux parties en forme d'ailes (42', 42), la face d'application de la butée (23) s'applique sur la partie en forme d'aile rigide (42') et que la face supplémentaire du corps de base soit espacée d'une matrice de découpage (41) de telle manière que la matrice de découpage (41), lors de la déformation de la partie en forme d'aile élastique (42) par rotation excentrique de la seconde partie d'appui (31), puisse être aisément introduite dans la fente ou en être retirée.

2. Outil selon la revendication 1, caractérisé en ce que le corps de base (20) présente un alésage (22), dans lequel est monté un boulon (12) à rotation autour de l'axe de pivotement (17), et en ce que la partie d'appui (31) est agencée aux extrémités frontales du boulon (22) de manière excentrique par rapport à l'axe de pivotement (17).

3. Outil selon la revendication 2, caractérisé en ce que, sur le boulon (12), une poignée munie d'une manette (11) est raccordée comme élément de commande (10).

4. Outil selon l'une quelconque des revendications 1 à 3, caractérisé en ce que la première partie d'appui (30) est conformée en broche cylindrique qui est maintenue, par sa première extrémité, dans un alésage (21) du corps de base (20) et peut être insérée, par son extrémité opposée au corps de base (20), dans un alésage du porte-matrice de découpage (40).

5. Outil selon l'une quelconque des revendications 1 à 4, caractérisé en ce que le corps de base (20) présente deux sections d'extrémité (24, 26) et une section centrale (25) raccordant les sections d'extrémité (24, 26), en ce que les sections d'extrémité (24, 26) portent les parties d'appui (30, 31) et en ce que la section centrale (25) est plus étroite en coupe transversale que les sections d'extrémité (24, 26).

6. Outil selon l'une quelconque des revendications 1 à 5, caractérisé en ce que les deux logements pour les parties d'appui (30, 31) sont agencés respectivement sur une partie en forme d'aile (42) du logement pour la matrice de découpage (41), et en ce que, à la suite du déplacement mutuel des deux parties d'appui (30, 31), les parties en forme d'ailes (42) sont écartées et le logement est ainsi évasé de manière élastique.
